# EUROPÄISCHE PATENTANMELDUNG

(11) **EP 3 015 024 A1**
(43) Veröffentlichungstag der Anmeldung: **04.05.2016**
(21) Anmeldenummer: 15187507.7
(22) Anmeldetag: 30.09.2015
(51) Int. Cl.: A47B 88/10, A47B 88/14

(54) **VORRICHTUNG ZUR FÜHRUNG EINES SCHUBELEMENTS, SCHUBELEMENT UND MÖBEL**

(30) Priorität: 28.10.2014 DE 202014105142 U
(71) Anmelder: Grass GmbH, 6973 Höchst (AT)
(72) Erfinder: Huber, Franz, 5211 Lengau (AT)
(74) Vertreter: Otten, Roth, Dobler & Partner mbB Patentanwälte

(57) **Zusammenfassung**

Es wird eine Vorrichtung zur Führung eines Schubelements vorgeschlagen, das mittels der Vorrichtung verschieblich an einem Wandabschnitt aufnehmbar ist, wobei die Vorrichtung eine Trägerschiene (2), eine Auszugschiene (3) und lastübertragende Lagermittel für eine Schiebelagerung der Auszugschiene (3) umfasst, um eine Verschiebebewegung der Auszugschiene (3) über eine Ausziehlänge der Vorrichtung (1) zu ermöglichen. Erfindungsgemäß weist die Trägerschiene (2) einen im Einbauzustand der Vorrichtung sich horizontal erstreckenden Trägerschienen-Horizontalabschnitt (2a) auf, wobei zwischen einer Oberseite des Trägerschienen-Horizontalabschnitts (2a) und einem oberen Auszugschienen-Schenkel (3b) eine erste Wälzlageranordnung der lastübertragenden Lagermittel mit ersten untereinander in der Lagerkörpergrundform gleichartigen Wälzlagerkörpern wirksam ist und zwischen einer Unterseite des Trägerschienen-Horizontalabschnitts (2a) und einem unteren Auszugschienen-Schenkel (3a) eine zweite Wälzlageranordnung der lastübertragenden Lagermittel mit untereinander in der Lagerkörpergrundform gleichartigen zweiten Wälzlagerkörpern wirksam ist, und wobei sich die Lagerkörpergrundform der ersten Wälzlagerkörper von der Lagerkörpergrundform der zweiten Wälzlagerkörper unterscheidet.

## Beschreibung

### Stand der Technik

Vorrichtungen zur Bewegungsführung eines Schubelements, das mittels der Vorrichtung verschieblich an einem Wandabschnitt aufnehmbar ist, sind bekannt. Die Vorrichtungen weisen zwei oder drei relativ zueinander verschiebliche Schienen und lastübertragende Lagermittel für eine Verschiebebewegung der betreffenden Schienen auf. Im Möbelbereich bzw. bei Küchenmöbeln sind derartige Vorrichtungen zur Führung zum Beispiel einer Schublade oder eines Gargutträgers bzw. einem Backblech oder einem Backgitter im Einsatz. Bei so genannten Teilauszügen wirken zwischen einer Trägerschiene und einer Auszugschiene lastübertragende Lagermittel mit Wälzkörpern. Bei Vollauszügen, mit denen eine größere Ausziehlänge möglich ist, ist zusätzlich eine Mittelschiene vorhanden.

Die Auszüge werden an einem Innen-Wandabschnitt wie zum Beispiel einer Seitenwand eines Küchengeräts oder einer Korpuswand eines Möbelkorpus unmittelbar oder beispielsweise über eine dazwischen vorhandene Gitterstruktur angebracht.

Mit den Lagermitteln wird eine geräusch- und reibungsarme lineare Verschiebebewegung der jeweiligen Schienen in beide Bewegungsrichtungen über die gesamte Ausziehlänge der Vorrichtung ermöglicht.

Insbesondere im Küchenmöbelbereich müssen die Führungen einerseits komplexen Anforderungen genügen und andererseits kompakt und dauerhaft zuverlässig bzw. stabil ausgebildet sein.

### Aufgabe und Vorteile der Erfindung

Aufgabe der vorliegenden Erfindung ist es, einleitend genannte Vorrichtungen bzw. Möbel im Hinblick auf eine technisch und wirtschaftlich vorteilhafte Weise bereitzustellen, insbesondere was die Zuverlässigkeit und Kompaktheit angeht.

Diese Aufgabe wird durch die unabhängigen Ansprüche gelöst.

Die abhängigen Ansprüche thematisieren vorteilhafte Weiterbildungen der Erfindung.

Die Erfindung geht aus von einer Vorrichtung zur Führung eines Schubelements, das mittels der Vorrichtung verschieblich an einem Wandabschnitt aufnehmbar ist, wobei die Vorrichtung eine an dem Wandabschnitt befestigbare Trägerschiene, eine dem Schubelement zuordenbare Auszugschiene und lastübertragende Lagermittel für eine Schiebelagerung der Auszugschiene umfasst, um eine Verschiebebewegung der Auszugschiene über eine Ausziehlänge der Vorrichtung zu ermöglichen.

Entsprechend der Ausziehlänge wird ein damit geführtes Schubelement zwischen einer komplett eingeschobenen und einer vollständig herausgezogenen Stellung relativ zum Möbelkorpus des Möbels hin- und herbewegbar.

Der Kern der Erfindung liegt darin, dass die Trägerschiene einen im Einbauzustand der Vorrichtung sich horizontal erstreckenden Trägerschienen-Horizontalabschnitt aufweist, wobei zwischen einer Oberseite des Trägerschienen-Horizontalabschnitts und einem oberen Auszugschienen-Schenkel eine erste Wälzlageranordnung der lastübertragenden Lagermittel mit ersten untereinander in der Lagerkörpergrundform gleichartigen Wälzlagerkörpern wirksam ist und zwischen einer Unterseite des Trägerschienen-Horizontalabschnitts und einem unteren Auszugschienen-Schenkel eine zweite Wälzlageranordnung der lastübertragenden Lagermittel mit untereinander in der Lagerkörpergrundform gleichartigen zweiten Wälzlagerkörpern wirksam ist, und wobei sich die Lagerkörpergrundform der ersten Wälzlagerkörper von der Lagerkörpergrundform der zweiten Wälzlagerkörper unterscheidet. Insbesondere sind sämtliche erste Wälzlagerkörper untereinander identisch wie auch sämtliche zweite Wälzlagerkörper. Damit wird eine konstruktiv vorteilhafte Lageranordnung, die eine vergleichsweise hohe Laufruhe bei der Bewegung des Schubelements ermöglicht, bereitgestellt. Insbesondere ist mit der erfindungsgemäßen Vorrichtung eine geräuscharme, reibungsminimierte und ruckfreie Verschiebebewegung der bei dem Ausfahr- oder Einschiebevorgang bewegten Auszugschiene realisierbar.

Der zum Beispiel stegartige flache Trägerschienen-Horizontalabschnitt erstreckt sich in der Länge in Bewegungsrichtung der Auszugschiene, insbesondere mit einem freien und einem verbundenen Längsrand, der parallel zur Bewegungsrichtung der Auszugschiene verläuft.

Die vorgeschlagene Anordnung ermöglicht außerdem eine insgesamt sehr kompakt bauende und damit platzsparende Führungsvorrichtung. Die kompakte Bauweise ist insbesondere in den abgestimmt zueinander vorhandenen Schienenabschnitten also in dem Trägerschienen-Horizontalabschnitt und dem oberen und dem unteren Auszugschienen-Schenkel begründet.

Weiter wird vorgeschlagen, dass gemäß einer vorteilhaften Variante der Erfindung die ersten Wälzlagerkörper eine zylindrische Lagerkörpergrundform aufweisen, und die zweiten Wälzlagerkörper eine kugelförmige Lagerkörpergrundform aufweisen. Insbesondere sind alle zylindrischen Lagerkörpergrundformen identisch zueinander und sämtliche kugelförmigen Lagerkörpergrundformen ebenfalls identisch untereinander. Mit dieser Anordnung können radiale und axiale Kräfte vorteilhaft aufgenommen werden. Rollreibungseffekte zwischen den Wälzlagerkörpern und Gegenabschnitten an dem Trägerschienen-Horizontalabschnitt und dem Auszugschienen-Schenkel sind minimiert. Des Weiteren können die Oberflächen der Wälzlagerkörper bzw. die Laufflächen des Trägerschienen-Horizontalabschnitts und des Auszugschienen-Schenkels mit einem Schmiermittel wie einem Lagerfett beaufschlagt sein zur weiteren Verbesserung der Lagerwirkung der Lagermittel. Die ersten und zweiten Wälzlagerkörper bestehen insbesondere jeweils alle aus dem gleichen Material, insbesondere aus einem für Wälzlagerkörper geeigneten gehärteten Edelstahlmaterial.

Gemäß einer vorteilhaften Alternative zur vorgenannten Ausbildung weisen die ersten Wälzlagerkörper alle eine kugelförmige Lagerkörpergrundform auf und die zweiten Wälzlagerkörper alle eine zylindrische Lagerkörpergrundform. Grundsätzlich lassen sich auf diese Weise die Vorteile wie oben erläutert realisieren.

Es ist überdies vorteilhaft, dass mehrere erste Wälzlagerkörper und mehrere zweite Wälzlagerkörper an einem gemeinsamen Halteelement aufgenommen sind. Insbesondere umfasst die erste Wälzlageranordnung wenigstens ein Halteelement, an dem zwei oder mehr erste Wälzlagerkörper aufgenommen sind und zwei oder mehr zweite Wälzlagerkörper aufgenommen sind. Ein Halteelement ist insbesondere als separates Bauteil zwischen den beiden Schienen in einem vergleichsweise schmalen Zwischenraum entsprechend formangepasst untergebracht. Das Halteelement wird beispielsweise als so genannte Käfig bzw. Lagerkäfig bezeichnet, welches dazu dient, die Wälzlagerkörper untereinander auf einem vorgebbaren Abstand bzw. in einer gewünschten Ausrichtung zu halten. Die Wälzlagerkörper sind am Halteelement gehalten und können darin mit einem geringen Spiel eine Roll- bzw. Drehbewegung ausführen, wenn eine Bewegung der Auszugschiene stattfindet. In der Regel ist das Halteelement nicht positionsfest in Bewegungsrichtung der Auszugschiene und wird damit selbst in die jeweilige Bewegungsrichtung der Auszugschiene mitgenommen. Die Wälzlagerkörper werden dabei durch Rollreibung bewegt.

Es ist überdies vorteilhaft, dass wenigstens zwei erste Wälzlagerkörper und wenigstens zwei zweite Wälzlagerkörper an einem gemeinsamen Halteelement vorhanden sind. Insbesondere sind genau zwei erste und genau zwei zweite Wälzlagerkörper an einem gemeinsamen Halteelement wie einem Lagerkäfig vorhanden. Das Haltelement weist demnach Abschnitte auf, die sich vertikal in einen Bereich oberhalb des Trägerschienen-Horizontalabschnitts erstrecken, und andere Abschnitte, die sich in einen Bereich unterhalb des Trägerschienen-Horizontalabschnitts erstrecken. Es ist nicht ausgeschlossen, dass genau ein erster und/oder genau ein zweiter Wälzlagerkörper an einem gemeinsamen Halteelement vorhanden sind. Vorteilhaft ist an einem Halteelement in vertikaler Richtung wenigstens eine paarweise Anordnung von einem ersten und einem zweiten Wälzlagerkörper realisiert bzw. ist in vertikaler Richtung ein erster Wälzlagerkörper gegenüberliegend zu einem zweiten Wälzlagerkörper, wobei dazwischen ein Abschnitt des Trägerschienen-Horizontalabschnitts vorhanden ist.

Vorteilhafterweise ist am Trägerschienen-Horizontalabschnitt eine oberseitige Wälzkörperlaufbahn und eine unterseitige Wälzkörperlaufbahn für ein Entlangbewegen der ersten und zweiten Wälzlagerkörper ausgebildet. Insbesondere findet damit vorteilhaft eine zuverlässige Bewegung gemäß einer Abrollbewegung der Wälzlagerkörper auf der jeweiligen Wälzkörperlaufbahn statt. Die Laufbahnen sind zumindest über eine Teillänge des Horizontalabschnitts ausgebildet. Die Teillänge ist auf eine maximal mögliche Ausziehlänge der erfindungsgemäßen Führungsvorrichtung bzw. der Auszugschiene abgestimmt. Die obere und die untere Wälzkörperlaufbahn sind am Trägerschienen-Horizontalabschnitt insbesondere gegenüberliegend über die gleiche Länge des Trägerschienen-Horizontalabschnitts vorhanden, lediglich über die Materialdicke des Trägerschienen-Horizontalabschnitts im Bereich der Wälzkörperlaufbahnen getrennt voneinander.

Dies ist bezogen auf eine Einbau- bzw. Funktionsausrichtung der erfindungsgemäßen Vorrichtung, in welcher der Trägerschienen-Horizontalabschnitt sich horizontal erstreckt bzw. dessen Oberseite und dessen Unterseite horizontal verlaufen.

Vorteilhafterweise ist am Trägerschienen-Horizontalabschnitt oberseitig oder unterseitig eine ebene Wälzkörperlaufbahn ausgebildet. Dies ist insbesondere für das Abrollen von zylindrischen Wälzlagerkörpern wie Zylinderrollen- oder Nadel-Wälzkörper mit zylindrischer Lagerkörpergrundform vorteilhaft.

Auch ist es vorteilhaft, dass am Trägerschienen-Horizontalabschnitt oberseitig oder unterseitig eine konkav geformte Wälzkörperlaufbahn ausgebildet ist. Die konkave Wälzkörperlaufbahn ist insbesondere länglich und rinnenförmig bzw. im Schnitt insbesondere gemäß eines Kreisbogenausschnitts geformt. Dies ist insbesondere für eine Kugellageranordnung vorteilhaft, womit ein flächiger Abroll- bzw. Abstützkontakt zwischen Außenabschnitten einer Wälzlagerkugel und der Wälzkörperlaufbahn möglich ist.

Gegebenenfalls sind alle Wälzkörper gleichartig, so dass an dem Horizontalabschnitt ober- und unterseitig entweder z. B. ebene Wälzkörperlaufbahnen oder beidseitig zum Beispiel konkave Wälzkörperlaufbahnen ausgebildet sind.

Eine weitere vorteilhafte Modifikation der Erfindung zeichnet sich dadurch aus, dass am Trägerschienen-Horizontalabschnitt auf einer Oberseite eine ebene Wälzkörperlaufbahn ausgebildet ist und auf einer Unterseite eine konkav geformte Wälzkörperlaufbahn ausgebildet ist. Der Trägerschienen-Horizontalabschnitt ist damit für eine vorteilhafte Lageranordnung geeignet ausgebildet, wonach auf der Oberseite des Trägerschienen-Horizontalabschnitts erste Wälzlagerkörper mit zylindrischer Lagerkörpergrundform und auf der Unterseite des Trägerschienen-Horizontalabschnitts zweite Wälzlagerkörper mit kugelförmiger Lagerkörpergrundform in Anlage kommen.

Vorteilhafterweise ist ein Höhenmaß insbesondere ein Durchmessermaß eines ersten Wälzlagerkörpers auf ein Höhenmaß insbesondere ein Durchmessermaß eines zweiten Wälzlagerkörpers abgestimmt. Vorteilhaft ist oberseitig am Trägerschienen-Horizontalabschnitt wenigstens ein erster Wälzlagerkörper vorhanden und unterseitig am Trägerschienen-Horizontalabschnitt wenigstens ein zweiter Wälzlagerkörper vorhanden, die sich im Durchmesser bezogen auf eine Dreh- bzw. Rollachse, um welche sich der Wälzlagerkörper drehend bzw. rollend bewegt, entsprechen. Damit ist beidseitig ein vergleichbarer und kompakter Bauraum für die Unterbringung der Wälzlagerkörper möglich. Demgemäß ist in vertikaler Richtung betrachtet ein Höhenmaß der ersten und zweiten Wälzlagerkörper gleich, womit ein konstruktiv vorteilhafter Gesamtaufbau der erfindungsgemäßen Führungsvorrichtung erreicht wird.

Die Erfindung betrifft außerdem eine Vorrichtung zur Führung eines Schubelements, das mittels der Vorrichtung verschieblich an einem Wandabschnitt aufnehmbar ist, wobei die Vorrichtung eine an dem Wandabschnitt befestigbare Trägerschiene, eine dem Schubelement zuordenbare Auszugschiene und eine zwischen der Auszugschiene und der Trägerschiene wirkende Mittelschiene umfasst, und lastübertragende Lagermittel für eine Schiebelagerung der Schienen über eine Ausziehlänge der Vorrichtung vorhanden sind. Dies betrifft so genannte Vollauszüge.

Der wesentliche Aspekt liegt darin, dass die Mittelschiene einen im Einbauzustand der Vorrichtung sich horizontal erstreckenden oberen Mittelschienen-Horizontalabschnitt aufweist, wobei zwischen einer Oberseite des oberen Mittelschienen-Horizontalabschnitts und einem oberen Auszugschienen-Schenkel eine erste Wälzlageranordnung der lastübertragenden Lagermittel mit ersten untereinander gleichartigen Wälzlagerkörpern wirksam ist und zwischen einer Unterseite des oberen Mittelschienen-Horizontalabschnitts und einem unteren Auszugschienen-Schenkel eine zweite Wälzlageranordnung der lastübertragenden Lagermittel mit untereinander gleichartigen zweiten Wälzlagerkörpern wirksam ist, und wobei die ersten Wälzlagerkörper eine Lagerkörpergrundform aufweisen, die sich von einer Lagerkörpergrundform der zweiten Wälzlagerkörper unterscheidet.

Damit lassen sich auch bei Vollauszügen die oben diskutierten Vorteile insbesondere in Bezug auf das Zusammenwirken der Mittelschiene mit der Auszugschiene realisieren.

Insbesondere ist es vorteilhaft, dass die Mittelschiene einen im Einbauzustand der Vorrichtung sich horizontal erstreckenden unteren Mittelschienen-Horizontalabschnitt aufweist, wobei zwischen einer Unterseite des unteren Mittelschienen-Horizontalabschnitts und einem unteren Trägerschienen-Schenkel eine erste Wälzlageranordnung der lastübertragenden Lagermittel mit ersten untereinander gleichartigen Wälzlagerkörpern wirksam ist und zwischen einer Oberseite des unteren Mittelschienen-Horizontalabschnitts und einem oberen Trägerschienen-Schenkel eine zweite Wälzlageranordnung der lastübertragenden Lagermittel mit untereinander gleichartigen zweiten Wälzlagerkörpern wirksam ist, und wobei die ersten Wälzlagerkörper eine Lagerkörpergrundform aufweisen, die sich von einer Lagerkörpergrundform der zweiten Wälzlagerkörper unterscheidet. Damit wird das Zusammenspiel zwischen der Mittelschiene und der Trägerschiene vorteilhaft möglich. Vorteilhaft sind die erste Wälzlageranordnung am oberen Mittelschienen-Horizontalabschnitt und die erste Wälzlageranordnung am unteren Mittelschienen-Horizontalabschnitt gleichartig insbesondere identisch aufgebaut. Entsprechend ist es vorteilhaft, dass die zweite Wälzlageranordnung am oberen Mittelschienen-Horizontalabschnitt und die zweite Wälzlageranordnung am unteren Mittelschienen-Horizontalabschnitt gleichartig insbesondere identisch aufgebaut sind. Die Mittelschiene ist insbesondere als U-förmiges zweifach rechtwinklig umgebogenes Blechteil gestaltet. Zwischen den beiden Mittelschienen-Horizontalabschnitten ist ein zum Beispiel gerader vertikaler Verbindungsabschnitt vorhanden.

Die Trägerschiene und die Auszugschiene sind in der Grundform bevorzugt zumindest annähernd gleich gestaltet bzw. an der Vorrichtung zu einer horizontalen Spiegelebene spiegelbildlich gestaltet.

Eine vorteilhafte Ausgestaltung des erfindungsgemäßen Vollauszugs ist dadurch gegeben, dass die ersten Wälzlagerkörper eine zylindrische Lagerkörpergrundform aufweisen und die zweiten Wälzlagerkörper eine kugelförmige Lagerkörpergrundform aufweisen. Neben einer platzsparenden Anordnung ist damit auch eine mechanisch sich gegenseitig stabilisierende Anordnung bereitgestellt. Die ersten Wälzlageranordnungen umfassen bevorzugt identische zylindrische Wälzlagerkörper und die zweiten Wälzlageranordnungen umfassen bevorzugt identische kugelförmige Wälzlagerkörper.

Es ist außerdem vorteilhaft, dass am oberen Mittelschienen-Horizontalabschnitt und am unteren Mittelschienen-Horizontalabschnitt eine oberseitige Wälzkörperlaufbahn und eine unterseitige Wälzkörperlaufbahn für ein Entlangbewegen der dazugehörigen Wälzlagerkörper ausgebildet ist. Insbesondere ist eine ebene Wälzkörperlaufbahn für erste Wälzlagerkörper in Zylinderform und eine konkave Wälzkörperlaufbahn für zweite Wälzlagerkörper in Kugelform vorteilhaft ausgestaltet.

Die Erfindung erstreckt sich außerdem auf ein Schubelement, das an einem Wandabschnitt bewegbar anordenbar ist, insbesondere ein Gargutträger für einen Backofen, mit einer Vorrichtung gemäß einer der oben erläuterten Ausbildungen. Damit wird das Schubelement, beispielsweise ein Backgitter, ein Backblech oder eine Ablagewanne, entweder mit zwei seitlich daran wirkenden Teil- bzw. Einfachauszügen oder mit zwei seitlich daran wirkenden Vollauszügen vorteilhaft realisierbar. Eine maximale Ausziehlänge des Schubelements ist mit dem Vollauszug größer gegenüber dem Einfach- bzw. Teilauszug.

Außerdem erstreckt sich die Erfindung auf ein Möbel, insbesondere eine Haushaltseinrichtung wie eine Kücheneinrichtung mit einer Vorrichtung nach einer der vorhergehenden Anordnungen.

Insbesondere wird damit ein Backofen mit einem Schubelement vorteilhaft ausbildbar.

### Figurenbeschreibung

Weitere Merkmale und Vorteile der Erfindung sind anhand zweier schematisiert dargestellter erfindungsgemäßer Ausführungsbeispiele näher erläutert. Im Einzelnen zeigt:
- Figur 1: ein perspektivisch dargestelltes erstes Ausführungsbeispiel einer erfindungsgemäßen Führungsvorrichtung im auseinandergezogenen Zustand,
- Figur 2: die Führungsvorrichtung gemäß Figur 1 im Längsschnitt in einem zusammengeschobenen Zustand,
- Figur 3: einen Schnitt durch die Anordnung aus Figur 2 gemäß der Linie A-A in Figur 2,
- Figur 4: ein perspektivisch dargestelltes zweites Ausführungsbeispiel einer erfindungsgemäßen Führungsvorrichtung im auseinandergezogenen Zustand,
- Figur 5: die Führungsvorrichtung gemäß Figur 4 im Längsschnitt in einem zusammengeschobenen Zustand und
- Figur 6: einen Schnitt durch die Anordnung aus Figur 5 gemäß der Linie B-B in Figur 5.

Zum Verständnis der nachfolgenden Begriffe "vertikal" und "horizontal", wobei auf die in den Figuren gezeigte Orientierung der erfindungsgemäßen Führungsvorrichtungen in einem Nutz- bzw. Einbauzustand Bezug genommen wird, ist in den Figuren eine vertikale Ausrichtung gemäß des Doppelpfeils V und eine erste horizontale Ausrichtung gemäß des Doppelpfeils H eingezeichnet, wobei V und H senkrecht zueinander ausgerichtet sind.

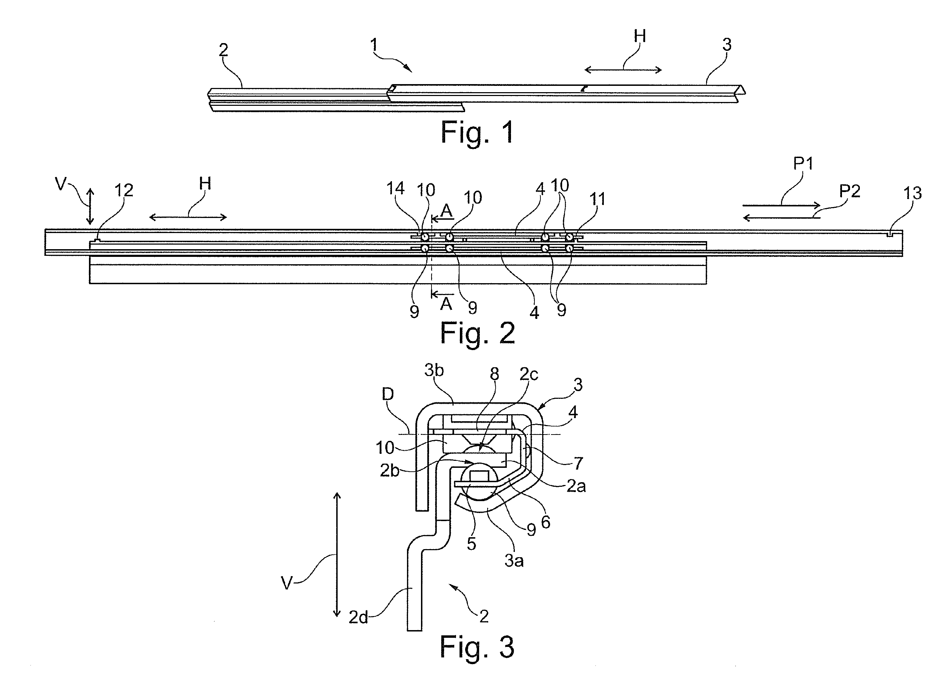

Weitere horizontale Ausrichtungen ergeben sich bezogen auf einen Schnittpunkt von H und V senkrecht zur Vertikalen V und winklig zur ersten Horizontalen H. Eine mit der erfindungsgemäßen Vorrichtung gemäß Figur 1 bereitstellbare Verschieberichtung für ein dazugehöriges Schubelement an einem Möbel ergibt sich parallel zur ersten Horizontalen H.

In den Figuren ist allein die jeweilige erfindungsgemäße Führungsvorrichtung dargestellt, jedoch nicht ein Möbel mit dazugehörigem Schubelement, das im Nutzzustand mit zwei untereinander gleichartigen wie in den Figuren gezeigten Führungsvorrichtungen an gegenüberliegenden Wandabschnitten des Möbels verschieblich anbringbar ist.

Figur 1 zeigt im nahezu vollständig ausgezogenen Zustand eine als Teilauszug 1 ausgebildete erfindungsgemäße Führungsvorrichtung perspektivisch schräg von oben. Der Teilauszug 1 umfasst eine Trägerschiene 2, welche an einem Wandabschnitt fest anbringbar zum Beispiel anschraubbar oder einklemmbar ist.

An der Trägerschiene 2 ist eine Auszugschiene 3 in Ausschieberichtung Pl und in Einschieberichtung P2 verschieblich aufgenommen. Zur Schiebelagerung zwischen der Trägerschiene 2 und der Auszugschiene 3 sind lastübertragende Lagermittel mit einem Lagerkäfig 4 mit Wälzlagerkörpern vorhanden. Der Lagerkäfig 4 weist zueinander über jeweils eine Umbiegung winklig ausgerichtete Käfigabschnitte 5, 6, 7 und 8 auf. Am Lagerkäfig 4 sind vier zueinander vorgegeben beabstandete und vertikal unten positionierte kugelförmige Lagerkugeln 9 und zueinander vorgegeben beabstandete und vertikal oben positionierte Lagernadeln 10 vorhanden. Am Lagerkäfig 4 sind die Lagerkugeln 9 beweglich bzw. rollend und die Lagernadeln 10 drehbar um die Drehachse D gehalten.

Die Lagernadeln 10 mit zylindrischer Außenform und die Lagerkugeln 9 weisen vorteilhaft den gleichen bzw. zumindest annähernd den gleichen Durchmesser auf. Die Länge der Lagernadeln 10 ist etwas größer, zum Beispiel nicht ganz zweifach größer, als der Lagerkugel-Durchmesser.

Zur Begrenzung einer Verschiebebewegung der Auszugschiene 3 relativ zur Trägerschiene 2 sind an der Trägerschiene 2 ein vorderer Anschlag 11 und ein hinterer Anschlag 12 und ebenso an der Auszugschiene 3 ein vorderer Anschlag 13 und ein hinterer Anschlag 14 vorgesehen. Gemäß Figur 2 erfolgt ein Anstehen im Bereich einer hintersten Lagernadel 10 an dem Anschlag 14, die Auszugschiene 3 ist vollständig in Einschieberichtung P2 relativ zur Trägerschiene 2 eingeschoben.

Die Lagerkugeln 9 laufen oberseitig in einer rillenförmigen Laufbahn 2b, die unterseitig an einem horizontal ausgerichteten ebenen Horizontalabschnitt 2a der Trägerschiene 2 ausgestaltet ist, der in ein offenes bzw. teilweise umschlossenes Hohlvolumen der Auszugschiene 3 hineinreicht. Die längliche gerade Laufbahn 2b weist eine zur Außenform der untereinander identischen Lagerkugeln 9 passende muldenförmige Kontur auf, so dass ein flächiges Anliegen bzw. Abrollen der Lagerkugeln 9 im Kontakt mit der Fläche der Laufbahn 2b erfolgt, wahlweise mit oder ohne Schmierstoff als dünner Schmierfilm im Kontaktbereich wie z. B. ein Wälzlagerfett.

Unterseitig stützen sich bzw. rollen die Lagerkugeln 9 innen an einem unteren gebogenen Schenkel 3a der Auszugschiene 3 ab, der innen ebenfalls entsprechend der Außenform der Lagerkugeln 9 eine rinnen- bzw. muldenförmige Kontur aufweist. Insgesamt ist jede Lagerkugel 9 über den Umfang betrachtet somit oben und unten jeweils über ca. 80 bis 90 Winkelgrade bzw. insgesamt über ca. 160 bis 180 Winkelgrade in einem formschließenden Kontakt oben mit der Laufbahn 2b und unten mit dem Schenkel 3a.

Die jeweiligen Oberseiten der Lagernadeln 10 rollen bzw. laufen innenseitig an einem oberen ebenen horizontalen Schenkel 3b der Auszugschiene 3 ab bzw. die jeweiligen Unterseiten an einer horizontalen ebenen oberen Laufbahn 2c des Horizontalabschnitts 2a der Trägerschiene 2. Die Laufbahnen 2b und 2c sind gegenüberliegend am Horizontalabschnitt 2a vorhanden.

Der Lagerkäfig 4 weist eine Länge in Richtung H im Bereich von ca. einem Viertel der Länge der Trägerschiene 2 bzw. von ca. einem Sechstel der Länge der Auszugschiene 3 auf.

Am Lagerkäfig 4 sind jeweils paarweise bzw. vertikal gegenüber zu den vier Lagerkugeln 9, vier Lagernadeln 10 vorhanden, wobei zwei Lagerkörperpaare im hinteren Abschnitt und zwei Lagerkörperpaare im vorderen Abschnitt des Lagerkäfigs 4 positioniert sind.

Der Lagerkäfig 4 ist zur seitlichen horizontalen Positionierung in punktuellem bzw. anstehendem Kontakt innen an gegenüberliegenden vertikalen Abschnitten der Auszugschiene 3 (s. Figur 3).

Ein vertikaler Abschnitt 2d der Trägerschiene 2 dient zum Anstecken oder anderweitigen Verbinden des Teilauszugs 1 mit einem Wandabschnitt zum Beispiel einer Möbelkorpus-Innenwand oder einer Seitenwand einer Backmuffel.

Ein mit dem Teilauszug 1 bewegbares Schubelement kann oben abstützend auf dem horizontalen Schenkel 3b der Auszugschiene 3 aufgesetzt bzw. befestigt werden, wobei für das Schubelement ein weiterer Teilauszug 1 an einem gegenüberliegenden Wandabschnitt entsprechend vorhanden und wirksam ist.

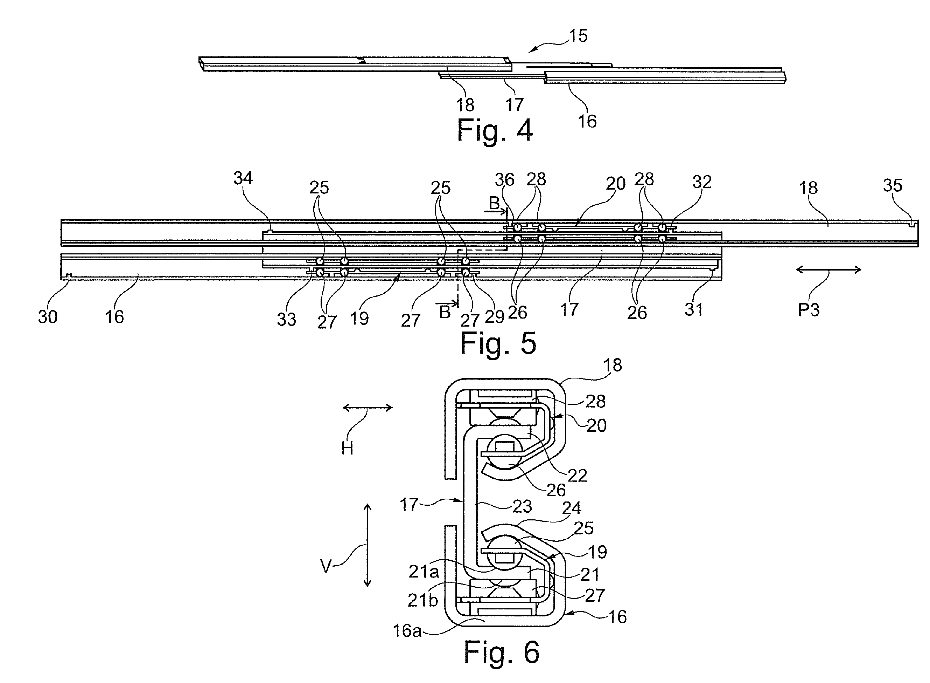

In den Figuren 4 bis 6 ist eine erfindungsgemäße Führungsvorrichtung als Vollauszug 15 mit einer Trägerschiene 16, einer Mittelschiene 17 und einer Auszugschiene 18 gezeigt. Die Schienen 16, 17 und 18 sind wie die Schienen 2, 3 als umgebogene längliche Blechprofile ausgestaltet. Außerdem ist zwischen der Trägerschiene 16 und der Mittelschiene 17 ein unterer Lagerkäfig 19 und zwischen der Mittelschiene 17 und der Auszugschiene 18 ein oberer Lagerkäfig 20 vorhanden.

Die Auszugschiene 18, der obere Teil der Mittelschiene 17 und der obere Lagerkäfig 20 mit den daran aufgenommenen Wälzlagerkörpern sind in der Grundform identisch und funktionsgleich zur Auszugschiene 3, dem Lagerkäfig 4 und dem oberen Teil der Trägerschiene 2 des Teilauszugs 1 gemäß der Figuren 1 bis 3 gestaltet, daher werden diese Teile nicht näher beschrieben.

Gemäß der Ansicht aus Figur 6 ist der untere Lagerkäfig 19 zu einer horizontalen Ebene spiegelbildlich zum Lagerkäfig 20 wie auch die Trägerschiene 16 spiegelbildlich zur Auszugschiene 18 ist.

Beide Lagerkäfige 19, 20 weisen paarweise vertikal gegenüberliegende Lagerkugeln und Lagernadeln auf. Demgemäß sind am unteren Lagerkäfig 19 vier obere Lagerkugeln 25 und vier untere Lagernadeln 27 vorhanden, welche durch einen, horizontalen, stegartigen, ebenen unteren Horizontalabschnitt 21 der Mittelschiene 17 getrennt sind. Am Horizontalabschnitt 21 rollen bzw. stützen sich die Lagerkugeln 25 oberseitig und die Lagernadeln 27 unterseitig ab.

Am oberen Lagerkäfig 20 sind ebenfalls paarweise vier untere Lagerkugeln 26 und vier obere Lagernadeln 28 vorhanden, welche durch einen, horizontalen, stegartigen, ebenen oberen Horizontalabschnitt 22 der Mittelschiene 17 getrennt sind, an dem die Lagerkugeln 26 unterseitig und die Lagernadeln 28 oberseitig abrollen bzw. sich abstützen.

Die Mittelschiene 17 ist demgemäß U-förmig mit einem vertikalen Verbindungsabschnitt 23, an dem oben rechtwinklig abgebogen der obere Horizontalabschnitt 22 und unten rechtwinklig abgebogen der untere Horizontalabschnitt 21 absteht.

Dementsprechend ist der obere Horizontalabschnitt 22 wie der Horizontalabschnitt 2a der Trägerschiene 2 gemäß der Figuen 1 bis 3 gestaltet.

Der untere Horizontalabschnitt 21 weist oben eine rillenförmige Laufbahn 21a für die Lagerkugeln 25 und unten eine ebene Laufbahn 21b für die Lagernadeln 27 auf.

Oben werden die Lagerkugeln 25 von einem gebogenen oberen Schenkel 24 der Trägerschiene 16 umgriffen.

Die Lagernadeln 27 sind unten in Kontakt mit einem ebenen horizontalen Schenkel 16a, auf der oberseitig die Lagernadeln 27 abrollen.

Die beiden Lagerkäfige 19, 20 sind in ihrer Verschieblichkeit gegenüber den Schienen 16, 17 und 18 über Anschläge 29, 30 an der Trägerschiene 16 bzw. Anschläge 31 bis 34 an der Mittelschiene und Anschläge 35, 36 an der Auszugschiene 18 begrenzt.

Des Weiteren sind die beiden Lagerkäfige 19, 20 in Verschieberichtung der Mittelschiene 17 bzw. der Auszugschiene 18 gemäß des Doppelpfeils P3 versetzt, wobei der untere Lagerkäfig 19 zwischen der Trägerschiene 16 und der Mittelschiene 17 weiter hinten in Einschieberichtung vorhanden ist, als der obere weiter vorne liegende Lagerkäfig 20 zwischen der Mittelschiene 17 und der Auszugschiene 18.

### Bezugszeichenliste:

- 1: Teilauszug
- 2: Trägerschiene
- 2a: Horizontalabschnitt
- 2b, 2c: Laufbahn
- 2d: Abschnitt
- 3: Auszugschiene
- 3a: Schenkel
- 3b: Schenkel
- 4: Lagerkäfig
- 5-8: Käfigabschnitt
- 9: Lagerkugel
- 10: Lagernadel
- 11-14: Anschlag
- 15: Vollauszug
- 16: Trägerschiene
- 16a: Schenkel
- 17: Mittelschiene
- 18: Auszugschiene
- 19: Lagerkäfig
- 20: Lagerkäfig
- 21: Horizontalabschnitt
- 21a: Laufbahn
- 21b: Laufbahn
- 22: Horizontalabschnitt
- 23: Verbindungsabschnitt
- 24: Schenkel
- 25, 26: Lagerkugel
- 27, 28: Lagernadel
- 29-36: Anschlag

## Patentansprüche

1. Vorrichtung (1) zur Führung eines Schubelements, das mittels der Vorrichtung (1) verschieblich an einem Wandabschnitt aufnehmbar ist, wobei die Vorrichtung (1) eine an dem Wandabschnitt befestigbare Trägerschiene (2), eine dem Schubelement zuordenbare Auszugschiene (3) und lastübertragende Lagermittel für eine Schiebelagerung der Auszugschiene (3) umfasst, um eine Verschiebebewegung der Auszugschiene (3) über eine Ausziehlänge der Vorrichtung (1) zu ermöglichen, **dadurch gekennzeichnet, dass** die Trägerschiene (2) einen im Einbauzustand der Vorrichtung (1) sich horizontal erstreckenden Trägerschienen-Horizontalabschnitt (2a) aufweist, wobei zwischen einer Oberseite des Trägerschienen-Horizontalabschnitts (2a) und einem oberen Auszugschienen-Schenkel (3b) eine erste Wälzlageranordnung der lastübertragenden Lagermittel mit ersten untereinander in der Lagerkörpergrundform gleichartigen Wälzlagerkörpern wirksam ist und zwischen einer Unterseite des Trägerschienen-Horizontalabschnitts (2a) und einem unteren Auszugschienen-Schenkel (3a) eine zweite Wälzlageranordnung der lastübertragenden Lagermittel mit untereinander in der Lagerkörpergrundform gleichartigen zweiten Wälzlagerkörpern wirksam ist, und wobei sich die Lagerkörpergrundform der ersten Wälzlagerkörper von der Lagerkörpergrundform der zweiten Wälzlagerkörper unterscheidet.

2. Vorrichtung nach Anspruch 1, **dadurch gekennzeichnet, dass** die ersten Wälzlagerkörper (10) eine zylindrische Lagerkörpergrundform aufweisen und die zweiten Wälzlagerkörper (9) eine kugelförmige Lagerkörpergrundform aufweisen.

3. Vorrichtung nach Anspruch 1 oder Anspruch 2, **dadurch gekennzeichnet, dass** die ersten Wälzlagerkörper eine kugelförmige Lagerkörpergrundform aufweisen und die zweiten Wälzlagerkörper eine zylindrische Lagerkörpergrundform aufweisen.

4. Vorrichtung nach einem der vorhergehenden Ansprüche, **dadurch gekennzeichnet, dass** mehrere erste Wälzlagerkörper (10) und mehrere zweite Wälzlagerkörper (9) an einem gemeinsamen Halteelement (4) aufgenommen sind.

5. Vorrichtung nach einem der vorhergehenden Ansprüche, **dadurch gekennzeichnet, dass** wenigstens zwei erste Wälzlagerkörper (10) und wenigstens zwei zweite Wälzlagerkörper (9) an einem gemeinsamen Halteelement (4) vorhanden sind.

6. Vorrichtung nach einem der vorhergehenden Ansprüche, **dadurch gekennzeichnet, dass** am Trägerschienen-Horizontalabschnitt (2a) eine oberseitige Wälzkörperlaufbahn und eine unterseitige Wälzkörperlaufbahn für ein Entlangbewegen der ersten und zweiten Wälzlagerkörper ausgebildet ist.

7. Vorrichtung nach einem der vorhergehenden Ansprüche, **dadurch gekennzeichnet, dass** am Trägerschienen-Horizontalabschnitt (2a) oberseitig oder unterseitig eine ebene Wälzkörperlaufbahn (2c) ausgebildet ist.

8. Vorrichtung nach einem der vorhergehenden Ansprüche, **dadurch gekennzeichnet, dass** am Trägerschienen-Horizontalabschnitt (2a) oberseitig oder unterseitig eine konkav geformte Wälzkörperlaufbahn (2b) ausgebildet ist.

9. Vorrichtung nach einem der vorhergehenden Ansprüche, **dadurch gekennzeichnet, dass** am Trägerschienen-Horizontalabschnitt (2a) auf einer Oberseite eine ebene Wälzkörperlaufbahn (2c) ausgebildet ist und auf einer Unterseite eine konkav geformte Wälzkörperlaufbahn (2b) ausgebildet ist.

10. Vorrichtung nach einem der vorhergehenden Ansprüche, **dadurch gekennzeichnet, dass** ein Höhenmaß insbesondere ein Durchmessermaß eines ersten Wälzlagerkörpers (10) auf ein Höhenmaß insbesondere ein Durchmessermaß eines zweiten Wälzlagerkörpers (9) abgestimmt ist.

11. Vorrichtung (15) zur Führung eines Schubelements, das mittels der Vorrichtung (15) verschieblich an einem Wandabschnitt aufnehmbar ist, wobei die Vorrichtung (15) eine an dem Wandabschnitt befestigbare Trägerschiene (16), eine dem Schubelement zuordenbare Auszugschiene (18) und eine zwischen der Auszugschiene (18) und der Trägerschiene (16) wirkende Mittelschiene (17) umfasst, und lastübertragende Lagermittel für eine Schiebelagerung der Schienen (17, 18) über eine Ausziehlänge der Vorrichtung (15) vorhanden sind, **dadurch gekennzeichnet, dass** die Mittelschiene (17) einen im Einbauzustand der Vorrichtung (15) sich horizontal erstreckenden oberen Mittelschienen-Horizontalabschnitt (22) aufweist, wobei zwischen einer Oberseite des oberen Mittelschienen-Horizontalabschnitts (22) und einem oberen Auszugschienen-Schenkel eine erste Wälzlageranordnung der lastübertragenden Lagermittel mit ersten untereinander gleichartigen Wälzlagerkörpern wirksam ist und zwischen einer Unterseite des oberen Mittelschienen-Horizontalabschnitts (22) und einem unteren Auszugschienen-Schenkel eine zweite Wälzlageranordnung der lastübertragenden Lagermittel mit untereinander gleichartigen zweiten Wälzlagerkörpern wirksam ist, und wobei die ersten Wälzlagerkörper eine Lagerkörpergrundform aufweisen, die sich von einer Lagerkörpergrundform der zweiten Wälzlagerkörper unterscheidet.

12. Vorrichtung nach Anspruch 11, **dadurch gekennzeichnet, dass** die Mittelschiene (17) einen im Einbauzustand der Vorrichtung sich horizontal erstreckenden unteren Mittelschienen-Horizontalabschnitt (21) aufweist, wobei zwischen einer Unterseite des unteren Mittelschienen-Horizontalabschnitts (21) und einem unteren Trägerschienen-Schenkel (16a) eine erste Wälzlageranordnung der lastübertragenden Lagermittel mit ersten untereinander gleichartigen Wälzlagerkörpern wirksam ist und zwischen einer Oberseite des unteren Mittelschienen-Horizontalabschnitts (21) und einem oberen Trägerschienen-Schenkel (24) eine zweite Wälzlageranordnung der lastübertragenden Lagermittel mit untereinander gleichartigen zweiten Wälzlagerkörpern wirksam ist, und wobei die ersten Wälzlagerkörper eine Lagerkörpergrundform aufweisen, die sich von einer Lagerkörpergrundform der zweiten Wälzlagerkörper unterscheidet.

13. Vorrichtung nach Anspruch 11 oder Anspruch 12, **dadurch gekennzeichnet, dass** die ersten Wälzlagerkörper (27, 28) eine zylindrische Lagerkörpergrundform aufweisen und die zweiten Wälzlagerkörper (25, 26) eine kugelförmige Lagerkörpergrundform aufweisen.

14. Vorrichtung nach einem der vorhergehenden Ansprüche 11 bis 13, **dadurch gekennzeichnet, dass** am oberen Mittelschienen-Horizontalabschnitt (22) und am unteren Mittelschienen-Horizontalabschnitt (21) eine oberseitige Wälzkörperlaufbahn (21a) und eine unterseitige Wälzkörperlaufbahn (21b) für ein Entlangbewegen der dazugehörigen Wälzlagerkörper (25-28) ausgebildet ist.

15. Schubelement, das an einem Wandabschnitt bewegbar anordenbar ist, insbesondere Gargutträger für einen Backofen, mit einer Vorrichtung (1, 15) nach einem der vorhergehenden Ansprüche.

16. Möbel insbesondere Haushaltseinrichtung wie eine Kücheneinrichtung mit einer Vorrichtung (1, 15) nach einem der vorhergehenden Ansprüche.
